# FASCICULE DE BREVET EUROPEEN

(11) **EP 4 522 430 B1**
(45) Date de publication et mention de la délivrance du brevet: **01.04.2026**
(21) Numéro de dépôt: 23726308.2
(22) Date de dépôt: 09.05.2023
(51) Int. Cl.: B60C 23/04, B60C 23/00, B60C 29/00

(54) **DISPOSITIF DE MESURE DE LA PRESSION D'UN PNEUMATIQUE**
REIFENDRUCKMESSVORRICHTUNG
DEVICE FOR MEASURING TYRE PRESSURE

(30) Priorité: 12.05.2022 FR 2204539
(43) Date de publication de la demande: 19.03.2025
(73) Titulaire: Safran Electronics & Defense, 75015 Paris (FR)
(72) Inventeur: PIETROPINTO, Sylvain, 77550 MOISSY-CRAMAYEL (FR); BIRABENT, Gilles, 77550 MOISSY-CRAMAYEL (FR); TARECO, Carlos, 77550 MOISSY-CRAMAYEL (FR); CASABIANCA, Antoine, 77550 MOISSY-CRAMAYEL (FR)
(74) Mandataire: Cabinet Boettcher
(86) Numéro de dépôt international: PCT/EP2023/062243
(87) Numéro de publication internationale: WO 2023/217765

(56) Documents cités:
- EP-A1- 3 984 787
- WO-A1-2016/090218
- US-A- 1 487 851

## Description

La présente invention concerne un dispositif de mesure de la pression d'un pneumatique d'une roue d'aéronef.

### ARRIERE PLAN DE L'INVENTION

Il est utile de connaître la pression des pneumatiques équipant les différentes roues d'un train d'atterrissage d'un aéronef durant différentes phases de fonctionnement de l'aéronef (phase de déplacement au sol, phase d'approche préalable l'atterrissage par exemple) ou dans le cadre d'opérations de maintenance.

A cet effet, l'aéronef est classiquement équipé d'un système de surveillance automatique de la pression régnant à l'intérieur des pneumatiques des roues de l'aéronef. Le système de surveillance est connu sous l'appellation « TPMS » (de l'anglais « Tire Pressure Monitoring System ») et comporte, pour chaque roue, un capteur de pression monté sur la jante de la roue. Le capteur de pression est couplé à un système de traitement de données embarqué et permet aux pilotes d'avoir un affichage en temps réel, dans le poste de pilotage, de la pression du pneumatique au cours des différentes phases de fonctionnement de l'aéronef. Durant les opérations de maintenance, les opérateurs peuvent aussi consulter cet affichage afin d'obtenir l'information souhaitée.

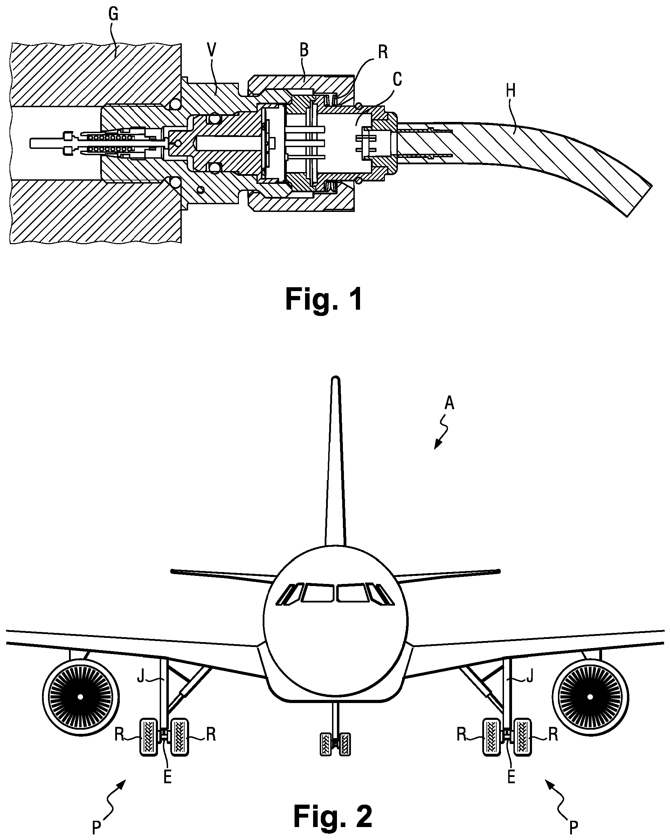

En référence à la figure 1, le capteur de pression C est généralement emmanché à une extrémité d'une valve V auto-obturante qui est montée sur la jante G afin de permettre le démontage du capteur de pression C sans perte de pression significative du pneumatique. La valve V est vissée dans un alésage communiquant au travers de la jante G avec le volume interne du pneumatique. Le capteur de pression C est maintenu emmanché dans la valve V au moyen d'une bague de verrouillage B vissée sur la valve V, et d'une rondelle ressort R écrasée entre un fond de la bague de verrouillage B et une extrémité du capteur de pression C permettant de compenser les jeux de fabrication et de limiter le desserrage de la bague de verrouillage B en fonctionnement. Le capteur de pression C est alimenté et communique avec le système de traitement de données à l'aide d'un câble H reliant ledit capteur de pression C à un contact tournant installé dans le moyeu de la roue.

L'inconvénient principal d'un tel agencement du capteur de pression C réside dans le fait que le serrage de la bague de verrouillage B tend à provoquer une rotation du capteur de pression C autour de son axe et donc d'engendrer une torsion du câble H qui, sous la contrainte, peut voir sa durée de vie limitée.

Qui plus est, l'utilisation d'une rondelle ressort a pour effet de gripper la bague de verrouillage B, ce qui tend à rendre la maintenance difficile.

Des dispositifs de l'art antérieur sont décrits dans les documents WO 2016/090218 A1, EP 3 984 787 A1 et US 1 487 851 A.

### OBJET DE L'INVENTION

L'invention a donc pour but de proposer un dispositif de mesure de la pression d'un pneumatique permettant d'obvier au moins en partie aux inconvénients précités.

### RESUME DE L'INVENTION

A cet effet, l'invention propose un dispositif de mesure de la pression d'un gaz contenu dans un pneumatique monté sur une jante de roue, le dispositif comprenant :
- une valve, adaptée à être montée sur la jante, comportant un premier canal d'écoulement de gaz, une épingle montée mobile en translation dans le premier canal entre une position d'ouverture et une position d'obturation du premier canal, et un ressort de rappel de l'épingle en position d'obturation ;
- un corps intermédiaire qui est monté sur la valve et qui délimite un deuxième canal prolongeant le premier canal et recevant une tige de fixation du corps intermédiaire à la valve, la tige de fixation ayant une première extrémité saillant dans le premier canal pour amener l'épingle de la position d'obturation à la position d'ouverture, une deuxième extrémité accessible depuis l'extérieur du deuxième canal, et une portion intermédiaire obturant le deuxième canal ;
- un capteur de pression reçu dans un troisième canal du corps intermédiaire, le troisième canal débouchant dans le deuxième canal entre la première extrémité et la portion intermédiaire de la tige de fixation en étant incliné par rapport au deuxième canal ; et
- des moyens de retenue du capteur de pression dans le troisième canal du corps intermédiaire.

Ainsi, le capteur peut être monté sur le corps intermédiaire alors que celui-ci n'est pas encore fixé à la valve et peut être amené dans une orientation quelconque. Le corps intermédiaire est ensuite fixé sur la valve au moyen de la tige de fixation qui assure une triple fonction : fixer le corps intermédiaire sur la valve, boucher le deuxième canal et déplacer l'épingle à la place du capteur.

Selon une caractéristique particulière, le dispositif comprend des moyens d'indexation angulaire du corps intermédiaire par rapport à la valve.

De manière particulière, les moyens d'indexation angulaire comprennent au moins deux goupilles portées par la valve et agencées pour coopérer avec des trous ménagés dans le corps intermédiaire.

Les moyens d'indexation angulaire du corps intermédiaire par rapport à la valve permettent d'empêcher toute rotation dudit corps intermédiaire par rapport à ladite valve, et donc de limiter les contraintes sur le ou les câbles s'étendant en saillie du capteur de pression. Ils permettent également une reproductibilité de la position angulaire du corps intermédiaire par rapport à la valve, et donc d'assurer le bon positionnement du capteur par rapport à la jante et d'en faciliter le contrôle.

De manière particulière, les goupilles et les trous sont agencés pour offrir au moins deux positions angulaires possibles du corps intermédiaire par rapport à la valve.

De manière particulière, la première extrémité de la tige de fixation comprend un perçage formant un quatrième canal d'écoulement du gaz.

Selon une autre caractéristique particulière, la première extrémité de la tige de fixation comprend un filetage engagé dans un taraudage du premier canal.

Selon une autre caractéristique particulière, les moyens de retenue comprennent une bague de verrouillage agencée pour être fixée sur le corps intermédiaire en emprisonnant le capteur de pression dans le troisième canal.

L'invention concerne aussi une roue d'aéronef comprenant une jante sur laquelle est monté un pneumatique et un tel dispositif.

L'invention concerne également un atterrisseur d'aéronef comprenant au moins une telle roue.

L'invention concerne en outre un aéronef comprenant au moins un tel atterrisseur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
La figure 1 est une vue en coupe axiale d'un dispositif de mesure de la pression d'un pneumatique d'une roue d'aéronef selon l'art antérieur ;
La figure 2 est une représentation simplifiée d'un aéronef comprenant des atterrisseurs principaux ayant des roues équipées du dispositif de mesure de pression selon l'invention ;
La figure 3 est une vue en coupe axiale de l'une des roues de l'aéronef illustré à la figure 2 ;
La figure 4 est une vue en perspective du dispositif de mesure illustré schématiquement à la figure 3 ;
La figure 5 est une vue partielle du dispositif de mesure illustré à la figure 4 ;
La figure 6 est une vue en coupe axiale du dispositif de mesure illustré à la figure 4 ;
La figure 7 est une vue en perspective d'une variante de la valve du dispositif de mesure illustré à la figure 4.

### DESCRIPTION DETAILLEE DE L'INVENTION

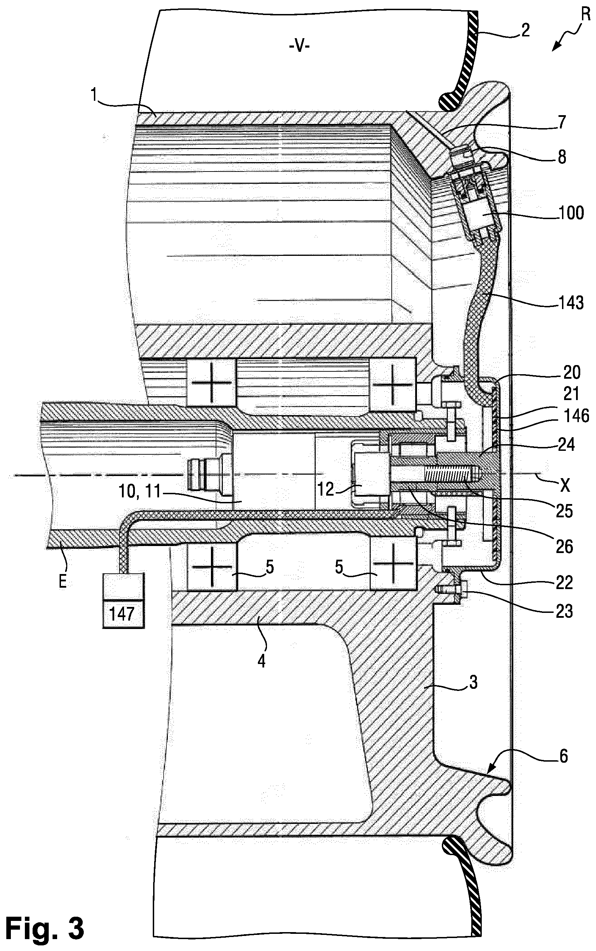

En référence à la figure 2, l'invention s'applique à un aéronef A comprenant des atterrisseurs principaux P comportant chacun une jambe J ayant une première extrémité articulée à une structure de l'aéronef A et une deuxième extrémité pourvue d'un essieu E. Chaque essieu E est pourvu, comme illustré à la figure 3, d'une roue R comprenant une jante 1 annulaire sur laquelle est monté un pneumatique 2. De façon connue, le pneumatique 2 délimite avec la jante 1 un volume V dans lequel un gaz est emprisonné. La jante 1 est reliée par un voile 3 à un moyeu 4 monté pour tourner, autour d'un axe X, sur une extrémité libre de l'essieu E au moyen de roulements 5.

A l'intérieur d'une extrémité libre de l'essieu E est disposé un tachymètre 10 destiné au suivi de la rotation de la roue 1. Le tachymètre 10 comprend une partie fixe 11 solidaire de l'essieu E, et une partie mobile 12 en rotation par rapport à la partie fixe 11, sensiblement autour de l'axe X.

Une coupelle 20 formant capot est rapportée sur la jante 1 suivant l'axe X. La coupelle 20 comprend un fond 21 entouré d'une paroi latérale 22 de forme cylindrique. La paroi latérale 22 comporte une collerette périphérique externe en appui contre la jante 1, via laquelle la coupelle 20 est fixée à la jante 1 au moyen de vis 23, de sorte que ladite coupelle 20 est solidaire en rotation de la roue 1.

La coupelle 20 comprend en outre une douille 24 qui s'étend sensiblement suivant l'axe X en saillie du capot 21 vers l'intérieur de l'essieu E. La douille 24 présente un trou central cannelé recevant une tige 25 cannelée s'étendant en saillie axiale de la douille 24. L'extrémité libre de la tige 25 est agencée pour être reliée à la partie mobile 12 du tachymètre 10 par l'intermédiaire d'un mécanisme de couplage 26 en rotation adapté pour compenser un éventuel décalage axial entre l'axe de rotation de la partie mobile 12 du tachymètre 10 et l'axe de rotation de la tige 25, et donc de la coupelle 20. Le mécanisme de couplage 26 est par exemple un tampon en caoutchouc solidarisé d'une part à la partie mobile 12 du tachymètre 10, et d'autre part à la tige 25 cannelée.

La jante 1 comprend une surface intérieure 6 de forme sensiblement tronconique et qui s'étend du voile 3 vers une extrémité distale de la jante 1. Un canal 7 de mesure de pression s'étend dans la jante 1 dans un plan passant par l'axe X de rotation de la roue. Le canal 7 est ici de forme sensiblement rectiligne et comporte une première extrémité débouchant dans le volume V et une deuxième extrémité débouchant sur la surface intérieure 6. La deuxième extrémité du canal 7 comporte un alésage 8 fileté intérieurement via lequel est fixé un dispositif 100 de mesure de la pression du gaz emprisonné dans le volume V délimité par la jante 1 et le pneumatique 2.

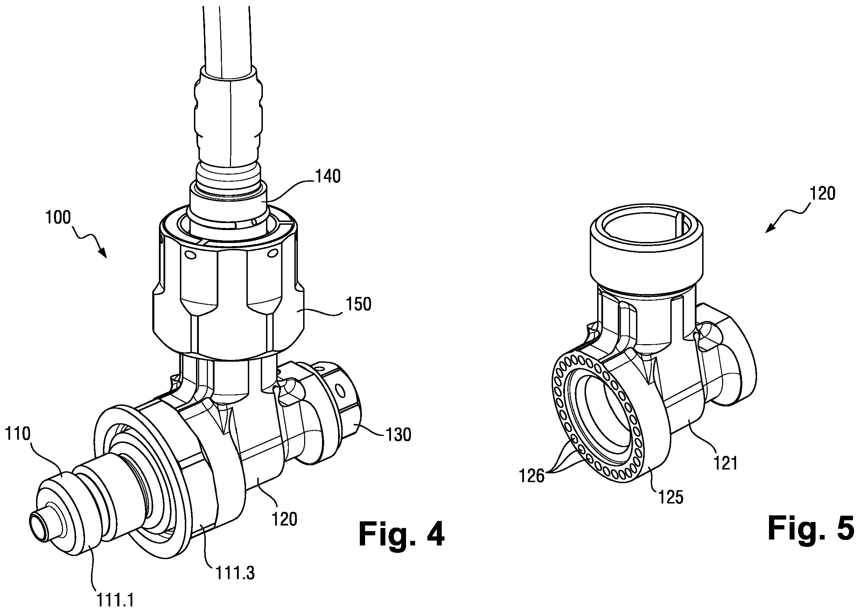

En référence à la figure 4, le dispositif 100 comprend une valve 110 auto-obturante vissée dans l'alésage 8 de la jante 1, un corps intermédiaire support de capteur 120 engagé sur la valve 110 et maintenu en position sur ladite valve 110 au moyen d'une tige de fixation 130 vissée dans la valve 110, et un capteur de pression 140 monté dans le support de capteur 120 et maintenu en position dans le support de capteur 120 au moyen d'une bague de verrouillage 150 vissée sur le support de capteur 120.

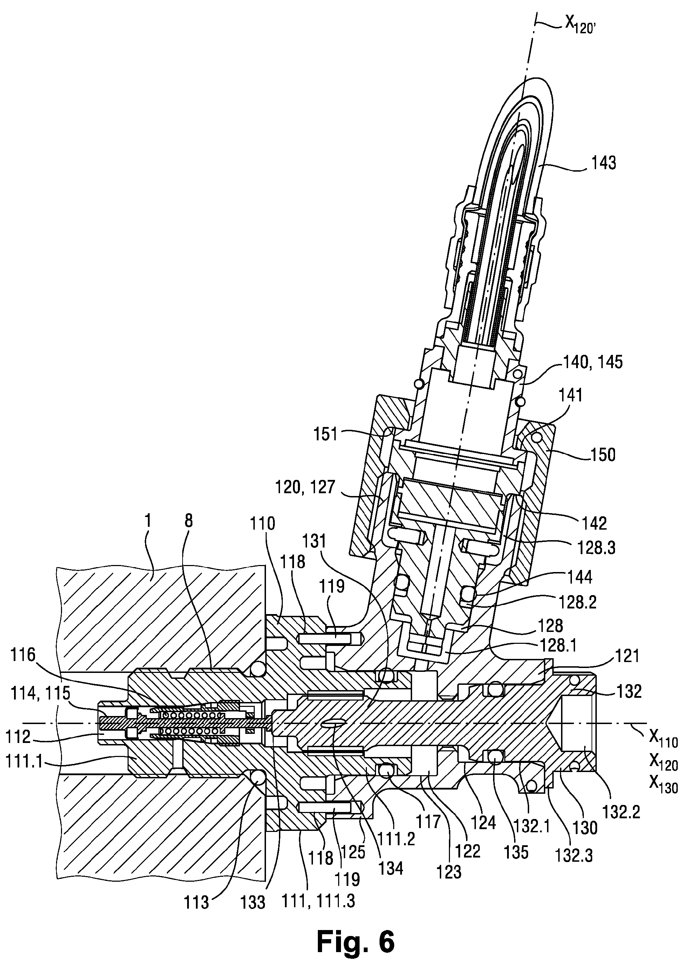

En référence à la figure 6, la valve 110 comporte un corps 111 de forme globalement tubulaire et qui délimite un canal 112 de passage du gaz stocké dans le volume V. Le corps 111 s'étend selon un axe X₁₁₀ et comprend un premier tronçon 111.1 de liaison avec la jante 1 et un deuxième tronçon 111.2 de liaison avec le support de capteur 120. Les premier et deuxième tronçons 111.1, 111.2 sont séparés par une collerette 111.3 externe qui a une première face transversale à l'axe X₁₁₀ formant une butée au vissage de la valve 110 dans l'alésage 8 de la jante 1 et, à l'opposé, une deuxième face transversale à l'axe X₁₁₀ formant une butée à l'engagement du support de capteur 120 sur le deuxième tronçon 111.2 du corps 111 suivant l'axe X₁₁₀.

Le premier tronçon 111.1 du corps 111 est pourvu extérieurement d'un filetage agencé pour coopérer avec le filetage de l'alésage 8 de la jante 1 de manière à permettre le vissage de la valve 110 sur la jante 1. Le premier tronçon 111.1 est en outre pourvu extérieurement d'une première gorge annulaire ménagée entre la collerette 111.3 et le filetage dudit premier tronçon 111.1. La première gorge reçoit un premier joint d'étanchéité 113 annulaire destiné à assurer l'étanchéité entre le premier tronçon 111.1 du corps 111 et l'alésage 8 de la jante 1.

Le premier tronçon 111.1 du corps 111 délimite une première portion d'extrémité du canal 112 à l'intérieur de laquelle est logé un mécanisme de valve 114 permettant ou empêchant le gaz emprisonné dans le volume V de s'écouler à travers le canal 112. Le mécanisme de valve 114 comprend une épingle 115 (ou clapet) montée mobile en translation, sensiblement selon l'axe X₁₁₀, entre une position ouverte dans laquelle elle est décalée d'un siège et autorise le gaz emprisonné dans le volume V à s'écouler à travers le canal 112, et une position fermée dans laquelle elle est en appui contre un siège et empêche ledit gaz de s'écouler à travers ledit canal 112. Un ressort 116 rappelle l'épingle 115 vers sa position fermée et un évent de sécurité est ménagé au niveau du filetage du premier tronçon 111.1 pour déboucher dans le mécanisme de valve 114 de manière à permettre au gaz de s'échapper du volume V lorsqu'un opérateur dévisse la valve 110 alors que le gaz est toujours sous pression. Le mécanisme de valve 114 étant bien connu de l'art antérieur, il ne sera pas décrit plus en détail ici.

Le deuxième tronçon 111.2 du corps 111 est pourvu extérieurement d'une deuxième gorge annulaire ménagée à une extrémité libre dudit deuxième tronçon 111.2. La deuxième gorge reçoit un deuxième joint d'étanchéité 117 annulaire destiné à assurer l'étanchéité entre le deuxième tronçon 111.2 du corps 111 et le support de capteur 120.

Le deuxième tronçon 111.2 délimite une deuxième portion d'extrémité du canal 112 qui est partiellement fileté intérieurement et dans laquelle est vissée la tige de fixation 130.

La collerette 111.3 présente selon l'axe X₁₁₀ une section de forme globalement hexagonale, et comporte deux trous 118 qui sont cylindriques d'axe parallèle à l'axe X₁₁₀ et qui débouchent sur la deuxième face transversale de la collerette 111.3 tournée vers le support de capteur 120. Les trous 118 sont identiques et diamétralement opposés par rapport à l'axe X₁₁₀. Chacun des trous 118 reçoit une goupille 119 anti-rotation s'étendant en saillie de la collerette 111.3. Les goupilles 119 sont ici identiques et ont un diamètre légèrement supérieur à celui des trous 118 de sorte que lesdites goupilles 119 sont emmanchées en force dans lesdits trous 118.

Le support de capteur 120 comprend une partie de corps principale 121 qui a une forme globalement tubulaire et qui s'étend sensiblement coaxialement à la valve 110 suivant un axe X₁₂₀ sensiblement confondu avec l'axe X₁₁₀. La partie de corps principale 121 délimite un canal 122 qui a une première extrémité comportant un premier alésage 123 conformé pour recevoir le deuxième tronçon 111.2 du corps de valve 111, et une deuxième extrémité, opposée à la première extrémité, comportant un deuxième alésage 124 conformé pour recevoir une portion de la tige de fixation 130. Une portion centrale du canal 122 assure une communication fluidique entre le premier alésage 123 et le deuxième alésage 124, et comprend un filetage dans lequel peut se visser la tige de fixation 130 de manière à ce que ladite tige de fixation 130 s'étende à travers la portion centrale et demeure fixée au support de capteur 120 lorsqu'elle est dévissée du corps de valve 111 (ce qui évite de perdre la tige de fixation 130).

Le premier alésage 123 a un diamètre interne légèrement supérieur à un diamètre externe du deuxième tronçon 111.2 du corps de valve 111 de manière à permettre un emmanchement du support de capteur 120 sur ledit deuxième tronçon 111.2, le deuxième joint d'étanchéité 117 étant destiné à assurer l'étanchéité entre ledit deuxième tronçon 111.2 et ledit premier alésage 123.

L'extrémité de la partie de corps principale 121 tournée vers la collerette 111.3 du corps de valve 111 comprend un collet 125 externe ayant une face latérale formant une butée à l'emmanchement du support de capteur 120 sur le deuxième tronçon 111.2 du corps de valve 111.

En référence à la figure 5, le collet 125 comporte une pluralité de trous 126 identiques agencés pour coopérer deux à deux avec les goupilles 119 portées par le corps de valve 111. Les trous 126 sont de forme cylindrique d'axe parallèle à l'axe X₁₂₀ et débouchent sur la face latérale du collet 125 tournée vers la collerette 111.3 du corps de valve 111. Les trous 126 sont symétriquement répartis autour de l'axe X₁₁₀, au voisinage d'un pourtour externe du collet 125, et ont un diamètre légèrement supérieur à celui des goupilles 119. Les centres des trous 126 s'inscrivent sur un même cercle dont le centre est situé sur l'axe X₁₂₀, les trous 126 étant diamétralement opposés deux à deux. Les goupilles 119 et les trous 126 forment ainsi des moyens d'indexation angulaire du support de capteur 120 sur le corps de valve 111, mais aussi des moyens de blocage en rotation dudit support de capteur 120 vis-à-vis du corps de valve 111, autour de l'axe X₁₁₀. On notera notamment que les trous 126 offrent, autour de l'axe X₁₁₀, une pluralité de positions angulaires possibles du support de capteur 120 par rapport au corps de valve 111.

Le support capteur 120 est maintenu emmanché sur le corps de valve 111 via la tige de fixation 130 qui a une forme globalement cylindre et qui s'étend selon un axe X₁₃₀ sensiblement confondu avec l'axe X₁₂₀ en traversant de part en part la partie de corps principale 121 dudit support de capteur 120.

La tige de fixation 130 comprend :
- une première extrémité 131 pourvue extérieurement d'un filetage agencé pour coopérer avec le filetage de la portion centrale du canal 122 du support de capteur 120 et le filetage interne du deuxième tronçon 111.2 du corps de valve 111,
- une deuxième extrémité 132 en saillie de la partie de corps principale 121, et
- une portion intermédiaire 132.1 agencée au voisinage de la deuxième extrémité 132 pour obstruer le deuxième alésage 124 du support de capteur 120.

La première extrémité 131 de la tige de fixation 130 comporte une face frontale 133 agencée pour venir en appui contre une extrémité de l'épingle 115 et pour amener ladite épingle 115 de la position fermée à la position ouverte lors du vissage de la tige de fixation 130 dans le corps de valve 111. La première extrémité 131 de la tige de fixation 130 comporte également un perçage qui s'étend dans un plan passant par l'axe X₁₃₀ et qui débouche de part et d'autre du filetage de la tige de fixation 130 pour former un canal 134 assurant une communication fluidique entre le canal 112 du corps de valve 111 et le canal 122 du support de capteur 120, et ainsi permettre au gaz emprisonné dans le volume V de traverser le corps de valve 111 pour arriver dans le premier alésage 123 du support de capteur 120. Le canal 134 est ici rectiligne et s'étend selon un axe oblique par rapport à l'axe X₁₃₀.

La deuxième extrémité 132 de la tige de fixation 130 est pourvue d'une empreinte 132.2 pour coopérer avec un outil permettant d'entraîner en rotation la tige de fixation 130 autour de son axe X₁₃₀ et comporte une embase 132.3 formant une butée au vissage de la tige de fixation 130 dans le corps de valve 111. L'embase 132.3 sépare la deuxième extrémité 132 de la portion intermédiaire 132.1 cylindrique reçue dans le deuxième alésage 124 de la partie de corps principale 121 du support de capteur 120. La portion intermédiaire 132.1 est pourvue extérieurement d'une gorge annulaire qui reçoit un joint d'étanchéité annulaire 135 destiné à assurer l'étanchéité entre ladite portion intermédiaire 132.1 et le deuxième alésage 124 du support de capteur 120.

Le support de capteur 120 comprend en outre une partie de corps secondaire 127 de forme globalement tubulaire et qui s'étend en saillie de la partie de corps principale 121 suivant un axe X₁₂₀, oblique par rapport à l'axe X₁₂₀. La partie de corps secondaire 127 délimite un canal 128 ayant une première extrémité débouchant à l'extérieur du support de capteur 120 et une deuxième extrémité, opposée à la première extrémité, débouchant dans le canal 122 de la partie de corps principale 121 entre le joint d'étanchéité 117 et un fond du premier alésage 123 de ladite partie de corps principale 121. Le canal 128 est étagé et comporte ainsi trois alésages 128.1, 128.2, 128.3 successifs formant un logement dans lequel est emmanché le capteur de pression 140 : le premier alésage 128.1 débouche à l'extérieur du support de capteur 120, le deuxième alésage 128.2 débouche dans le premier alésage 128.1 et a un diamètre supérieur à celui dudit premier alésage 128.1, et le troisième alésage 128.3 débouche dans le deuxième alésage 128.2 et a un diamètre supérieur à celui dudit deuxième alésage 128.2.

Le capteur de pression 140 est de forme globalement cylindrique et s'étend en extrémité d'un câble 143 saillant de la coupelle 20. Le capteur de pression 140 est assujetti de manière étanche dans la partie de corps secondaire 127 du support de capteur 120 au moyen de la bague de verrouillage 150 et d'un joint d'étanchéité 144 porté par ledit capteur de pression 140. La bague de verrouillage 150 est vissée sur un filetage externe ménagé à une extrémité libre de la partie de corps secondaire 127 du support de capteur 120, et comprend un épaulement 151 interne agencé pour coopérer avec un premier épaulement 141 externe du capteur de pression 140 de manière à amener un deuxième épaulement 142 externe dudit capteur de pression 140 en butée contre ladite extrémité libre de la partie de corps secondaire 127. Le joint d'étanchéité 144 assure l'étanchéité entre le capteur de pression 140 et le deuxième alésage 128.2 de la partie de corps secondaire 127 du support de capteur 120.

Le capteur de pression 140 est ici de type piézoélectrique et comprend une sonde de pression 145 adaptée pour mesurer une pression dans la plage utile des pressions régnant à l'intérieur des pneumatiques. La sonde de pression 145 est reliée, via le câble 143, à un module 146 de traitement du signal et de pilotage de la sonde de pression 145. Le module 146 comprend un circuit imprimé disposé sur le fond 21 de la coupelle 20, autour de la douille 24.

Une unité de traitement 147 est solidarisée à une partie fixe de l'atterrisseur ou au corps de l'aéronef, et est adaptée pour l'exploitation et en particulier l'affichage des mesures de pression effectuées au moyen du capteur de pression 140. Le module 146 et l'unité de traitement 147 sont reliés l'un à l'autre par des moyens de communication (non représentés) adaptés pour établir une transmission radiofréquence, c'est-à-dire par voie hertzienne, entre ledit module 146 et ladite unité de traitement 147. Cette transmission est bidirectionnelle, c'est-à-dire que chaque entité peut adresser et recevoir des informations. Les moyens de communication sont également adaptés pour transmettre par voie hertzienne l'énergie électrique nécessaire au fonctionnement du capteur de pression 140.

Le support de capteur 120, le capteur 140 et la bague de verrouillage 150 forment ainsi un ensemble qu'il est possible de désemmancher de la valve 110 simplement en procédant au dévissage et au retrait de la tige de fixation 130. Le dévissage de la tige de fixation 130 entraîne le passage de l'épingle 115 de la valve 110 de la position ouverte à la position fermée (avant que le filetage de la tige de fixation 130 soit totalement désengagée du taraudage), ce qui permet le démontage de l'ensemble formé par le support de capteur 120, le capteur 140 et la bague de verrouillage 150 sans que ce démontage provoque un dégonflage du pneumatique 2. Il n'est alors pas nécessaire de dévisser la bague de verrouillage 150 lors d'une opération de maintenance
Les goupilles 119 portées par la valve 110 et les trous 126 ménagés dans le support de capteur 120 permettent de :
- positionner angulairement le support de capteur 120 (et donc le capteur 140) vis-à-vis de la valve 110 selon l'axe X₁₀₀, les trous 126 offrant plusieurs positions angulaires possibles ; et
- solidariser en rotation la valve 110 et le support de capteur 120 de manière à empêcher toute rotation dudit support de valve 120 (et donc du capteur 140) par rapport à ladite valve 110 autour de l'axe X₁₀₀, X₁₂₀.

L'utilisation d'une sécurité de type fil frein et la détermination d'un couple de serrage pour la tige de fixation 130 et la bague de verrouillage 150 permet un meilleur contrôle et une reproductibilité de l'assemblage du dispositif 100.

Bien entendu, l'invention n'est pas limitée au mode de réalisation décrit mais englobe toute variante entrant dans le champ de l'invention telle que définie par les revendications.

Bien que le dispositif 100 s'applique ici aux roues R équipant les atterrisseurs principaux P, il peut aussi s'appliquer aux roues équipant l'atterrisseur avant de l'aéronef A illustré à la figure 1, et plus généralement à toute roue équipant un atterrisseur.

Bien que le dispositif 100 s'applique ici à une roue d'aéronef, il peut plus généralement s'appliquer à tout véhicule équipé d'une roue pourvue d'un pneumatique emprisonnant un gaz.

Le nombre de goupilles 119 peut être supérieur à deux. De préférence, les goupilles 119 sont équitablement réparties autour de l'axe X₁₁₀.

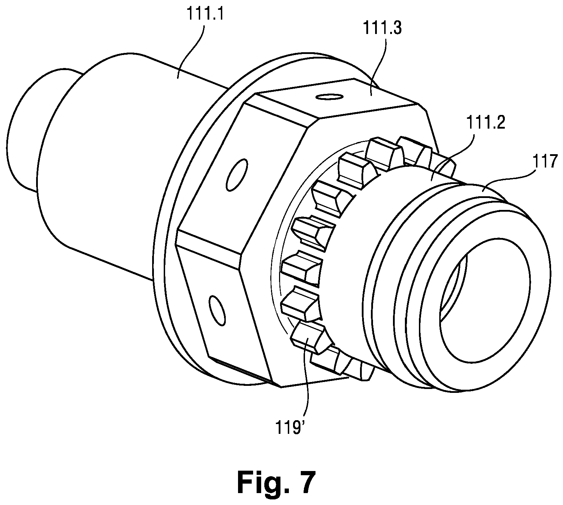

Les goupilles 119 et les trous 126 peuvent être remplacés par tout autre moyen d'indexation angulaire permettant d'assurer un positionnement angulaire du support de capteur 120 vis-à-vis de la valve 110. Par exemple, le deuxième tronçon 111.2 du corps de valve 111 peut comprendre, comme illustré à la figure 7, une couronne dentée 119' extérieurement et adaptée pour coopérer avec une couronne dentée intérieurement et reçue dans le premier alésage 123 du support de capteur 120.

Bien que la partie de corps secondaire 127 du support de capteur 120 s'étende ici obliquement par rapport à la partie de corps principale 121 dudit support de capteur 120, elle peut aussi s'étendre perpendiculairement. Que la partie de corps secondaire 127 s'étende obliquement ou perpendiculairement par rapport à la partie de corps principale 121, on considère ici que ladite partie de corps secondaire 127 est inclinée par rapport à ladite partie de corps principale 121.

## Revendications

1. Dispositif (100) de mesure de la pression d'un gaz contenu dans un pneumatique (2) monté sur une jante (1) de roue (R), le dispositif comprenant :
- une valve (110), adaptée à être montée sur la jante (1), comportant un premier canal (112) d'écoulement de gaz, une épingle (115) montée mobile en translation dans le premier canal entre une position d'ouverture et une position d'obturation du premier canal, et un ressort (116) de rappel de l'épingle en position d'obturation ;
le dispositif étant caractérisé en comprenant :
- un corps intermédiaire (120) qui est monté sur la valve et qui délimite un deuxième canal (122) prolongeant le premier canal et recevant une tige de fixation (130) du corps intermédiaire à la valve, la tige de fixation ayant une première extrémité saillant dans le premier canal pour amener l'épingle de la position d'obturation à la position d'ouverture, une deuxième extrémité accessible depuis l'extérieur du deuxième canal, et une portion intermédiaire obturant le deuxième canal ;
- un capteur de pression (140) reçu dans un troisième canal (128) du corps intermédiaire, le troisième canal débouchant dans le deuxième canal entre la première extrémité et la portion intermédiaire de la tige de fixation en étant incliné par rapport au deuxième canal ; et
- des moyens de retenue (150) du capteur de pression dans le troisième canal du corps intermédiaire.

2. Dispositif (100) selon la revendication 1, comprenant des moyens d'indexation angulaire (119, 126) du corps intermédiaire (120) par rapport à la valve (110).

3. Dispositif selon la revendication 2, dans lequel les moyens d'indexation angulaire (119, 126) comprennent au moins deux goupilles (119) portées par la valve (110) et agencées pour coopérer avec des trous (126) ménagés dans le corps intermédiaire (120).

4. Dispositif (100) selon la revendication 3, dans lequel les goupilles (119) et les trous (126) sont agencés pour offrir au moins deux positions angulaires possibles du corps intermédiaire (120) par rapport à la valve (110).

5. Dispositif (100) selon l'une quelconque des revendications précédentes, dans lequel la première extrémité de la tige de fixation (130) comprend un perçage formant un quatrième canal (134) d'écoulement du gaz.

6. Dispositif (100) selon l'une quelconque des revendications précédentes, dans lequel la première extrémité de la tige de fixation (130) comprend un filetage engagé dans un taraudage du premier canal (112).

7. Dispositif (100) selon l'une quelconque des revendications précédentes, dans lequel les moyens de retenue comprennent une bague de verrouillage (150) agencée pour être fixée sur le corps intermédiaire (127) en emprisonnant le capteur de pression (140) dans le troisième canal (128).

8. Roue (R) d'aéronef comprenant une jante (1) sur laquelle est monté un pneumatique (2) et un dispositif (100) selon l'une quelconque des revendications 1 à 7.

9. Atterrisseur (P) d'aéronef comprenant au moins une roue (R) selon la revendication 8.

10. Aéronef (A) comprenant au moins un atterrisseur (P) selon la revendication 9.

## Patentansprüche

1. Vorrichtung (100) zur Messung eines Gasdrucks in einem an einer Felge (1) eines Rades (R) angebrachten Reifen (2), wobei die Vorrichtung umfasst:
- ein Ventil (110), das dafür angepasst ist, an der Felge (1) angebracht zu werden, und welches enthält: einen ersten Gasströmungskanal (112), eine Nadel (115), die zwischen einer Öffnungsstellung und einer Verschlussstellung zum Verschließen des ersten Kanals in dem ersten Kanal translatorisch verschiebbar angebracht ist, sowie eine Rückstellfeder (116) zum Zurückstellen der Nadel in die Verschlussstellung;
wobei die Vorrichtung **dadurch gekennzeichnet ist, dass** sie Folgendes umfasst:
- einen Zwischenkörper (120), der an dem Ventil angebracht ist und einen zweiten Kanal (122) begrenzt, welcher den ersten Kanal fortsetzt und eine Befestigungsstange (130) zur Befestigung des Zwischenkörpers an dem Ventil aufnimmt, wobei die Befestigungsstange aufweist: ein erstes Ende, das in den ersten Kanal hineinragt, um die Nadel aus der Verschlussstellung in die Öffnungsstellung zu führen, ein zweites Ende, das von außerhalb des zweiten Kanals zugänglich ist, und einen Mittelabschnitt, der den zweiten Kanal verschließt;
- einen Drucksensor (140), der in einem dritten Kanal (128) des Zwischenkörpers aufgenommen ist, wobei der dritte Kanal zwischen dem ersten Ende und dem Mittelabschnitt der Befestigungsstange in den zweiten Kanal mündet und dabei in Bezug auf den zweiten Kanal geneigt ist; und
- Rückhaltemittel (150), die dazu dienen, den Drucksensor in dem dritten Kanal des Zwischenkörpers in Position zu halten.

2. Vorrichtung (100) nach Anspruch 1, umfassend Winkelindexiermittel (119, 126) zur Winkelindexierung des Zwischenkörpers (120) in Bezug auf das Ventil (110).

3. Vorrichtung nach Anspruch 2, wobei die Winkelindexiermittel (119, 126) zumindest zwei von dem Ventil (110) getragene Stifte (119) umfassen, die dafür ausgelegt sind, mit in dem Zwischenkörper (120) ausgebildeten Öffnungen (126) zusammenzuwirken.

4. Vorrichtung (100) nach Anspruch 3, wobei die Stifte (119) und die Öffnungen (126) derart ausgelegt sind, dass zumindest zwei Winkelpositionen des Zwischenkörpers (120) in Bezug auf das Ventil (110) frei wählbar sind.

5. Vorrichtung (100) nach einem der vorhergehenden Ansprüche, wobei das erste Ende der Befestigungsstange (130) eine Bohrung umfasst, die einen vierten Gasströmungskanal (134) bildet.

6. Vorrichtung (100) nach einem der vorhergehenden Ansprüche, wobei das erste Ende der Befestigungsstange (130) ein Außengewinde umfasst, das mit einem Innengewinde des ersten Kanals (112) in Schraubeingriff steht.

7. Vorrichtung (100) nach einem der vorhergehenden Ansprüche, wobei die Rückhaltemittel einen Verriegelungsring (150) umfassen, der dafür ausgelegt ist, derart auf dem Zwischenkörper (127) befestigt zu werden, dass der Drucksensor (140) von ihm umschlossen und so in dem dritten Kanal (128) festgehalten wird.

8. Luftfahrzeugrad (R), umfassend eine Felge (1), auf welcher ein Reifen (2) montiert ist, und eine Vorrichtung (100) nach einem der Ansprüche 1 bis 7.

9. Luftfahrzeug-Fahrwerk (P), umfassend zumindest ein Rad (R) nach Anspruch 8.

10. Luftfahrzeug (A), umfassend zumindest ein Fahrwerk (P) nach Anspruch 9.

## Claims

1. A device (100) for measuring the pressure of a gas contained in a tyre (2) mounted on a rim (1) of a wheel (R), the device comprising:
- a valve (110), suitable for being mounted on the rim (1), comprising a first gas flow channel (112), a pin (115) mounted so as to be able to move in translation in the first channel between a position in which the first channel is open and a position in which it is closed, and a spring (116) for returning the pin to the closed position;
the device being **characterised by** comprising:
- an intermediate body (120) that is mounted on the valve and that delimits a second channel (122) extending the first channel and receiving a fastening rod (130) for fastening the intermediate body to the valve, the fastening rod having a first end projecting into the first channel for moving the pin from the closed position to the open position, a second end that can be accessed from outside the second channel, and an intermediate portion closing the second channel;
- a pressure sensor (140) received in a third channel (128) of the intermediate body, the third channel leading into the second channel between the first end and the intermediate portion of the fastening rod, being inclined in relation to the second channel; and
- means (150) for retaining the pressure sensor in the third channel of the intermediate body.

2. The device (100) according to claim 1, comprising means (119, 126) for indexing the intermediate body (120) at an angle in relation to the valve (110).

3. The device according to claim 2, wherein the angular indexing means (119, 126) comprise at least two studs (119) carried by the valve (110) and arranged to cooperate with holes (126) provided in the intermediate body (120).

4. The device (100) according to claim 3, wherein the studs (119) and the holes (126) are arranged to provide the intermediate body (120) with at least two possible angular positions in relation to the valve (110).

5. The device (100) according to any one of the preceding claims, wherein the first end of the fastening rod (130) comprises a piercing forming a fourth gas flow channel (134).

6. The device (100) according to any one of the preceding claims, wherein the first end of the fastening rod (130) comprises a thread engaged in a tapped hole of the first channel (112).

7. The device (100) according to any one of the preceding claims, wherein the retaining means comprise a locking ring (150) arranged to be fastened on the intermediate body (127), trapping the pressure sensor (140) in the third channel (128).

8. An aircraft wheel (R) comprising a rim (1) on which a tyre (2) is mounted and a device (100) according to any one of claims 1 to 7.

9. An aircraft landing gear (P) comprising at least one wheel (R) according to claim 8.

10. An aircraft (A) comprising at least one landing gear (P) according to claim 9.
